# EUROPEAN PATENT APPLICATION

(11) **EP 4 644 588 A1**
(43) Date of publication of application: **05.11.2025**
(21) Application number: 23910809.5
(22) Date of filing: 28.12.2023
(51) Int. Cl.: C25B 13/08, C25B 1/04

(54) **COMPOSITE DIAPHRAGM FOR HYDROGEN PRODUCTION BY ALKALINE ELECTROLYZED WATER, AND PREPARATION METHOD FOR COMPOSITE DIAPHRAGM**

(30) Priority: 28.12.2022 CN 202211698390
(71) Applicant: Hua Xia Hydrogen Technology (Xiamen) Co., Ltd., Xiamen, Fujian 361000 (CN)
(72) Inventor: GAO, Xiaoping, Xiamen, Fujian 361005 (CN); ZHI, Suohong, Xiamen, Fujian 361005 (CN)
(74) Representative: Winter, Brandl - Partnerschaft mbB
(86) International application number: PCT/CN2023/142643
(87) International publication number: WO 2024/140892

(57) **Abstract**

The present invention provides an improved composite diaphragm for hydrogen production by alkaline electrolysis water. A thermally induced phase separation method is used for preparation, the process is simple, large-scale and large-area stable production can be realized, and the prepared composite diaphragm has high hydrophilicity and high mechanical strength, can tolerate high temperature (90-160°C) and high-concentration alkali liqid, and is an excellent diaphragm for an alkaline electrolytic cell for water electrolysis.

## Description

### Technical Field

The present invention relates to the field of hydrogen production by alkaline electrolysis water, and more specifically, to a composite diaphragm for hydrogen production by alkaline electrolysis water, and preparation method thereof.

### Background

Today, the economic development of the world is increasingly constrained by energy sources. Fossil fuels such as petroleum and coal not only cause severe environmental pollution but will also be gradually depleted in the foreseeable future. Unlike other new energy sources such as solar energy, nuclear energy, geothermal energy, ocean energy, and biomass energy, hydrogen energy is a renewable energy source derived from energy-carrying substance. Due to its features of high combustion heat, no pollution, and wide availability, hydrogen is regarded as one of the desired energy carriers.

Currently, hydrogen is mainly produced from natural gas, petroleum and its products, coal, and water electrolysis in industry. The cost of hydrogen production from fossil fuels is low, but the pollution and the generation of greenhouse gases will be caused inevitably during the process, and fossil fuels as the raw materials are non-renewable. In contrast, hydrogen production from water electrolysis produces no greenhouse gases, and especially hydrogen production from alkaline water electrolysis, as a relatively mature and reliable method, is simply operated, causes no pollution during the process and has a high hydrogen purity up to 99.7~99.9%.

The alkaline electrolyzer stacks is used as the main device for hydrogen production by alkaline water electrolysis, which is mainly composed of multiple electrolytic cells. Each electrolytic cell includes anode, cathode, diaphragm and electrolyte. The diaphragm plays a critical role in the alkaline electrolyzer, and it is positioned between the cathode and the anode to prevent the mixing of oxygen produced from the anode side and hydrogen produced from the cathode side, thereby ensuring hydrogen purity, current efficiency and safety.

Conventionally, in China, most of the alkaline electrolyzer manufacturers use asbestos cloth as the diaphragm in the past. Asbestos diaphragm has the advantages of low price and good insulation, but it still has several drawbacks as follows: (1) asbestos tends to swell during electrolysis, which will significantly reduce its service life, and additionally the impact of gas is easy to cause holes produced on asbestos along the direction of its thickness, which will lead to the purity decrease of the produced gas; (2) asbestos material is easy to dissolve in high-temperature alkaline solution, so the operating temperature of alkaline electrolyzer is desired to meet some requirements of asbestos diaphragms, and therefore the use of asbestos diaphragms will limit the improvement of electrolyzer efficiency; and (3) asbestos is a carcinogen, and some fine asbestos fibers released in the process of mining, processing and use will be harmful to human health.

Some of the alkaline electrolyzer manufacturers in China also use sulfonated polyphenylene sulfide (PPS) woven fabric as the diaphragm. Because the pore size of the woven cloth is within the range from 1 to 10 µm, oxygen produced from the anode side and hydrogen produced from the cathode side tend to mix during electrolysis. In addition, the leakage of electrolyte may occur in the process of use, which greatly limits the improvement of electrolyzer efficiency.

Based on the above analysis, there are demands to develop a composite diaphragm for alkaline electrolyzers which can be produced stably by a simple process in large quantities and large areas, has a resistance to high temperature of 90~160°C and concentrated alkali, and has a high mechanical strength, and its preparation method, that is of great significance for promoting the rapid development of hydrogen production by alkaline water electrolysis.

### Summary of the Invention

The purpose of the present invention is to solve at least part of the problems of the diaphragm for hydrogen production by alkaline water electrolysis in the prior art, and to provide an improved composite diaphragm for hydrogen production by alkaline electrolysis water. Such composite diaphragm can be prepared simply and stably in large quantity and area by a thermally induced phase separation method, and the composite diaphragm prepared thereby has high hydrophilicity and high mechanical strength, can tolerate high temperature of 90-160°C and high-concentration alkali liquid, and is an excellent diaphragm for hydrogen production by alkaline electrolysis water.

The invention provides a method for preparing a composite diaphragm for hydrogen production by alkaline electrolysis water, which comprises the following steps of:
(1) adding a polymer, a diluent, a plasticizer and an inorganic particle precursor with a mass ratio of (10-50): (30-85): (5-15): (1-15) into a stirring kettle, heating to 130-220°C and stirring thoroughly until a homogeneous solution is obtained, and leaving the solution stand for defoaming to prepare a diaphragm-forming solution;
(2) heating a polymer support mesh to a temperature of 60-160°C, evenly coating the diaphragm-forming solution on the surface of the polymer support mesh, and subsequently performing a two-stage cooling process, so as to produce a primary diaphragm via thermally induced phase separation occurred during the continuous first and second cooling process;
(3) immersing the primary diaphragm in an extract solution at 20~50°C for 2~12 hours, so as to remove the diluent and meanwhile generate inorganic particles in situ, and thereby obtain a composite diaphragm.

The present invention also provides a composite diaphragm for hydrogen production by alkaline electrolysis water, which is prepared by the method of the present invention.

The present invention has the advantages and beneficial effects as described below. According to the thermally induced phase separation method of present invention for preparing highly hydrophilic composite diaphragm, by introducing inorganic particle precursors and regulating the composition of the extraction solution, hydrophilic inorganic particles can be incorporated when the diaphragm pores are generated through extraction, thereby achieving an uniform distribution of inorganic particles on the surface, the pore surface and the cross section of the diaphragm, and accordingly greatly increasing the hydrophilicity of the diaphragm. According to this method, the formation of pores and the generation of inorganic particles are completed in one step, avoiding the problem of weak bonding between inorganic particles and the diaphragm substrate in traditional diaphragm preparation methods, and the distribution uniformity of diaphragm pores and inorganic particles can be easily controlled. Therefore, the present invention provides a simple and practical new process to produce highly hydrophilic composite diaphragms via thermally induced phase separation in large quantities and large areas.

The present invention includes the following items:
Item 1: A method for preparing a composite diaphragm for hydrogen production by alkaline electrolysis water, characterized in that, which comprises the following steps of:
   (1) adding a polymer, a diluent, a plasticizer and an inorganic particle precursor with a mass ratio of (10-50):(30-85):(5-15):(1-15) into a stirring kettle, heating to 130-220°C and stirring thoroughly until a homogeneous solution is obtained, and leaving the solution stand for defoaming to prepare a diaphragm-forming solution;
   (2) heating a polymer support mesh to a temperature of 60-160°C, evenly coating the diaphragm-forming solution on the surface of the polymer support mesh, and subsequently performing a two-stage cooling process, so as to produce a primary diaphragm via thermally induced phase separation occurred during the continuous first and second cooling process;
   (3) immersing the primary diaphragm in an extract solution at 20~50°C for 2~12 hours, so as to remove the diluent and meanwhile generate inorganic particles in situ, and thereby obtain a composite diaphragm.
Item 2: The method according to item 1, characterized in that, the polymer is one or more selected from the group consisting of polysulfone, polyethersulfone, polyimide, sulfonated polyphenylene sulfide, sulfonated polyetheretherketone and sulfonated polytetrafluoroethylene.
Item 3: The method according to item 1 or 2, characterized in that, the diluent is one or more selected form the group consisting of diphenyl ether, butyrolactone, cyclohexanone, methyl salicylate and dimethyl sulfone.
Item 4: The method according to any one of items 1 to 3, characterized in that, the plasticizer is one or more selected from group of dimethyl phthalate, dioctyl phthalate, dibutyl phthalate, dioctyl sebacate and dioctyl adipate.
Item 5: The method according to any one of items 1 to 4, characterized in that, the inorganic particle precursor is tetrabutyl titanate and/or zirconium oxychloride.
Item 6: The method according to any one of items 1 to 5, characterized in that, the extract solution is an aqueous solution containing acid or alkali.
Item 7: The method according to item 6, characterized in that, the aqueous solution containing acid or alkali is 2-15wt% ammonia solution or 1-10wt% hydrochloric acid solution.
Item 8: The method according to any one of items 1 to 7, characterized in that, the extract solution also contains polar solvent(s), preferably water and/or ethanol.
Item 9: The method according to any one of items 1 to 8, characterized in that, the first cooling process uses air as the cooling medium, with a temperature of 5 to 50°C and a humidity of 25 to 50 RH%, and the liquid film (formed on the polymer support mesh by coating the diaphragm-forming solution) stays in the air for 5 to 60 seconds.
Item 10: The method according to any one of items 1 to 9, characterized in that, the second cooling process uses ice-water mixture as the cooling medium, with a temperature of 0°C, and the liquid film stays in the ice-water mixture for 20 to 150 seconds.
Item 11: The method according to any one of items 1 to 10, characterized in that, the polymer support mesh is made by one or more materials selected from the group consisting of polypropylene, polyimide, polyphenylene sulfide, polyether ether ketone and nylon-66, with a thickness of 40 to 450 µm and a mesh size of 20 to 150 mesh.
Item 12: A composite diaphragm for hydrogen production by alkaline electrolysis water, which is prepared by the method of any one of items 1 to 11.

### Detailed Description

The present invention will be further explained in detail through the accompanying drawings and embodiments. Through these descriptions, the features and advantages of the present application will become more clearly defined.

The term "exemplary" used herein means "serving as an example, embodiment, or illustration." Any embodiment described herein as "exemplary" should not be interpreted as being superior or better than other embodiments. Although various aspects of the embodiments are shown in the drawings, they need not be drawn to scale unless specifically indicated.

Furthermore, the technical features in different embodiments of the present application described below can be combined with each other if they do not conflict.

The composite diaphragm for hydrogen production by alkaline electrolysis water according to the present invention has high hydrophilicity and is prepared by thermally induced phase separation method, which is based on the basic principle that, a polymer, a diluent, a plasticizer, and an inorganic particle precursor are mixed to form a homogeneous diaphragm-forming solution at high temperature, and then phase separation is induced by cooling at a lower temperature; the diluent is removed by an extract solution containing acid or alkali and a solvent exchange is carried out; and accordingly, under the catalysis of the acid or alkali solution, hydrophilic inorganic particles are formed by the inorganic particle precursor on the surface of the diaphragm, the inner surfaces of pores in the diaphragm and the cross section of the diaphragm, thereby resulting in a highly hydrophilic composite diaphragm.

In one embodiment of the present invention, the method for preparing the composite diaphragm for hydrogen production by alkaline electrolysis water comprises the following steps of:(1) adding a polymer, a diluent, a plasticizer and an inorganic particle precursor with a mass ratio of (10-50):(30-85):(5-15):(1-15) into a stirring kettle, heating to 130-220°C and stirring thoroughly until a homogeneous solution is obtained, and leaving the solution stand for defoaming to prepare a diaphragm-forming solution; (2) heating a polymer support mesh to a temperature of 60-160°C, delivering the diaphragm-forming solution to the feed tank of a coating machine and evenly coating the solution on the surface of the polymer support mesh preferably at a speed of 0.05~1 m/min, and subsequently, performing a two-stage cooling process, so as to produce a primary diaphragm via thermally induced phase separation occurred upon entering an air bath and an ice-water bath successively; (3) immersing the primary diaphragm in an extract solution at 20~50°C for 2~12 hours, so as to remove the diluent and meanwhile generate inorganic particles in situ, and thereby obtain a highly hydrophilic composite diaphragm.

In one embodiment of the present invention, the polymer preferably is one or more selected from the group consisting of polysulfone, polyethersulfone, polyimide, sulfonated polyphenylene sulfide, sulfonated polyetheretherketone and sulfonated polytetrafluoroethylene.

In one embodiment of the present invention, the diluent is characterized by having a high boiling point, which allows it to dissolve the polymer at higher temperature and achieve phase separation with the polymer at lower temperature, and preferably is one or more selected from the group consisting of diphenyl ether, butyrolactone, cyclohexanone, methyl salicylate and dimethyl sulfone.

In one embodiment of the present invention, the plasticizer is characterized by containing flexible groups, which can enhance the toughness of the composite diaphragm, and preferably is one or more selected from the group consisting of dimethyl phthalate, dioctyl phthalate, dibutyl phthalate, dioctyl sebacate and dioctyl adipate.

In one embodiment of the present invention, the inorganic particle precursor is a substance that can generate inorganic particles under the catalysis of acid or alkali solution, and is preferably tetrabutyl titanate and/or zirconium oxychloride.

In one embodiment of the present invention, the extract solution is an aqueous solution containing acid or alkali, and can further contain low-boiling-point polar solvent that can dissolve the diluent. The polar solvent is preferably water, ethanol, or a mixture thereof. When the extract solution contains the polar solvent ethanol, the solvent of the extract solution is water-ethanol mixed solvent, with the volume ratio of ethanol to water ranging from 5:95~30:70. The aqueous solution containing acid or alkali is 2~15wt% ammonia solution or 1-10wt% hydrochloric acid solution, which can catalyze the inorganic particle precursor to generate inorganic particles.

In the present invention, the two-stage cooling process is carried out after the diaphragm-forming solution is coated on the polymer support mesh. Compared with one-stage process in single cooling bath, the two-stage process in two cooling baths is more conducive to the infiltration of the diaphragm-forming solution on the polymer support mesh surface, thereby making it easier for the diaphragm-forming solution to infiltrate the polymer support mesh, and moreover, allows the pore size, pore quantity, and cross-sectional structure of the diaphragm to be controlled easily, and accordingly allows the diaphragms with different porosities to be achieved easily according to the specific requirements in use of the diaphragms later.

In one embodiment of the present invention, the first stage of the two-stage cooling process is carried out in an air bath, which uses air as the cooling medium, with a temperature of 5 to 50°C and a humidity of 25 to 50 RH%, and the liquid film stays in the air for 5 to 60 seconds. The arrangement of the cooling air bath facilitates the coating of the diaphragm-forming solution on the surface of the polymer support mesh. Air has a lower specific heat capacity than water, so the diaphragm-forming solution has a slower cooling rate in the air bath than in the water bath at the same temperature. With a slower cooling rate, the pore size and the continuity of the cross-section of the primary diaphragm will greatly increase. In the process of phase separation, the growth and coalescence time of the droplets in the diaphragm-forming solution will increase, and the viscosity of the diaphragm-forming solution will not increase rapidly, which is conducive to the growth and coalescence of the droplets, resulting in a continuous phase structure of the primary diaphragm, and thereby improving the uniformity and mechanical properties of the diaphragm.

In one embodiment of the present invention, the second stage of the two-stage cooling process is carried out in an ice-water bath, which uses ice-water mixture as the cooling medium, with a temperature of 0°C, and the liquid film stays in the mixture of ice and water for 20 to 150 seconds. The diaphragm-forming solution completes the initial phase separation in the first cooling bath and forms a uniform continuous phase. The ice-water bath is arranged to make the droplets in the diaphragm-forimg solution rapidly cool down, and due to the higher cooling rate, the time for droplet growth and coalescence is shortened and the viscosity of the diaphragm-forming solution increases sharply, and thereby the growth and coalescence of droplets are inhibited. During the rapid cooling process, the diaphragm-forming solution can quickly passes through the liquid-liquid phase separation region, so that the crystallization of the polymer and diluent will be predominant, which can result in the determined pore size and cross-sectional structure of the primary diaphragm rapidly.

In one embodiment of the present invention, the polymer support mesh is made by one or more materials selected from the group consisting of polypropylene, polyimide, polyphenylene sulfide, polyether ether ketone and nylon-66, with a thickness of 40 to 450 µm and a mesh size of 20 to 150 mesh.

In the present invention, before coating the diaphragm-forming solution, the polymer support mesh is heated to a temperature of 60-160°C. Preheating the polymer support mesh enhances the wettability of the diaphragm-forming solution on the surface of the polymer support mesh, and the rate of pre-crystallization and solidification of the polymeric diaphragm-forming material on the support mesh can be regulated, thereby improving the compatibility between the diaphragm-forming material and the support mesh.

In another embodiment of the present invention, a composite diaphragm for hydrogen production by alkaline electrolysis water is provided, which is prepared by the method described in the present invention.

The present invention will be described in more detail by the following examples, but the examples do not constitute limitations of the present invention.

### Example1

Polysulfone, dimethyl sulfone, dimethyl phthalate, zirconium oxychloride in a mass ratio of 15:75:5:5 was added to a stirring kettle and mixed uniformly. The mixture was heated to 180°C and stirred thoroughly to form a homogeneous solution, and then was left stand for defoaming. The diaphragm-forming solution was transferred to the feed tank of a coating machine and evenly coated on the surface of a polyphenylene sulfide support mesh with a thickness of 300 µm and a mesh size of 100 mesh at a speed of 0.1 m/min. Before coating with the diaphragm-forming solution, the polyphenylene sulfide support mesh was heated to a temperature of 90°C. The support mesh coated with the diaphragm-forming solution was immersed in an air bath with a temperature of 20°C and a humidity of 25 RH% for 10 s and then immersed in an ice-water bath with a temperature of 0°C for 30 s to form a primary diaphragm. The primary diaphragm was immersed in ethanol-water solution (the volume ratio of ethanol to water is 20:80) containing 5 wt% ammonia at 50°C for 12 h to obtain a highly hydrophilic composite diaphragm.

### Example 2

Polyether sulfone, diphenyl ether, dioctyl phthalate, tetrabutyl titanate in a mass ratio of 18:70:7:5 was added to a stirring kettle and mixed uniformly. The mixture was heated to 150°C and stirred thoroughly to form a homogeneous solution, and then was left stand for defoaming. The diaphragm-forming solution was transferred to the feed tank of a coating machine and evenly coated on the surface of a polypropylene support mesh with a thickness of 350 µm and a mesh size of 50 mesh at a speed of 0.5 m/min. Before coating with the diaphragm-forming solution, the polypropylene support mesh was heated to a temperature of 100°C. The support mesh coated with the diaphragm-forming solution was immersed in an air bath with a temperature of 10°C and a humidity of 40 RH% for 5 s and then immersed in an ice-water bath with a temperature of 0°C for 10 s to form a primary diaphragm. The primary diaphragm was immersed in ethanol-water solution (the volume ratio of ethanol to water is 10:90) containing 3 wt% hydrochloric acid at 60°C for 12 h to obtain a highly hydrophilic composite diaphragm.

### Example 3

Sulfonated polyphenylene sulfide, butyrolactone, dibutyl phthalate, zirconium oxychloride in a mass ratio of 15:75:2:8 was added to a stirring kettle and mixed uniformly. The mixture was heated to 200°C and stirred thoroughly to form a homogeneous solution, and then was left stand for defoaming. The diaphragm-forming solution was transferred to the feed tank of a coating machine and evenly coated on the surface of a poly(ether-ether-ketone) support mesh with a thickness of 300 µm and a mesh size of 80 mesh at a speed of 0.6 m/min. Before coating with the diaphragm-forming solution, the poly(ether-ether-ketone) support mesh was heated to a temperature of 110°C. The support mesh coated with the diaphragm-forming solution was immersed in an air bath with a temperature of 35°C and a humidity of 30 RH% for 15 s and then immersed in an ice-water bath with a temperature of 0°C for 30 s to form a primary diaphragm. The primary diaphragm was immersed in ethanol-water solution (the volume ratio of ethanol to water is 20:80) containing 10 wt% ammonia at 40°C for 12 h to obtain a highly hydrophilic composite diaphragm.

### Example 4

Polyimide, cyclohexanone, dioctyl sebacate, tetrabutyl titanate in a mass ratio of 20:72:3:5 was added to a stirring kettle and mixed uniformly. The mixture was heated to 220°C and stirred thoroughly to form a homogeneous solution, and then was left stand for defoaming. The diaphragm-forming solution was transferred to the feed tank of a coating machine and evenly coated on the surface of a nylon-66 support mesh with a thickness of 450 µm and a mesh size of 150 mesh at a speed of 1 m/min. Before coating with the diaphragm-forming solution, the nylon-66 support mesh was heated to a temperature of 120°C. The support mesh coated with the diaphragm-forming solution was immersed in an air bath with a temperature of 50°C and a humidity of 50 RH% for 5 s and then immersed in an ice-water bath with a temperature of 0°C for 10 s to form a primary diaphragm. The primary diaphragm was immersed in ethanol-water solution (the volume ratio of ethanol to water is 10:90) containing 10 wt% hydrochloric acid at 30°C for 12 h to obtain a highly hydrophilic composite diaphragm.

### Example 5

Sulfonated poly(ether-ether-ketone), methyl salicylate, dioctyl adipate, zirconium oxychloride in a mass ratio of 20:72:3:5 was added to a stirring kettle and mixed uniformly. The mixture was heated to 200°C and stirred thoroughly to form a homogeneous solution, and then was left stand for defoaming. The diaphragm-forming solution was transferred to the feed tank of a coating machine and evenly coated on the surface of a poly(ether-ether-ketone) support mesh with a thickness of 350 µm and a mesh size of 40 mesh at a speed of 0.3 m/min. Before coating with the diaphragm-forming solution, the poly(ether-ether-ketone) support mesh was heated to a temperature of 130°C. The support mesh coated with the diaphragm-forming solution was immersed in an air bath with a temperature of 30°C and a humidity of 20 RH% for 5 s and then immersed in an ice-water bath with a temperature of 0°C for 20 s to form a primary diaphragm. The primary diaphragm was immersed in ethanol-water solution (the volume ratio of ethanol to water is 30:70) containing 8 wt% ammonia at 40°C for 12 h to obtain a highly hydrophilic composite diaphragm.

### Example 6

Sulfonated polytetrafluoroethylene, methyl salicylate, dioctyl adipate and tetrabutyl titanate in a mass ratio of 30:50:8:12 was added to a stirring kettle and mixed uniformly. The mixture was heated to 200°C and stirred thoroughly to form a homogeneous solution, and then was left stand for defoaming. The diaphragm-forming solution was transferred to the feed tank of a coating machine and evenly coated on the surface of a polyphenylene sulfide support mesh with a thickness of 300 µm and a mesh size of 40 mesh at a speed of 0.3 m/min. Before coating with the diaphragm-forming solution, the polyphenylene sulfide support mesh was heated to a temperature of 150°C. The support mesh coated with the diaphragm preparation solution was immersed in an air bath with a temperature of 25°C and a humidity of 30 RH% for 5 s and then immersed in an ice-water bath with a temperature of 0°C for 60 s to form a primary diaphragm. The primary diaphragm was immersed in ethanol-water solution (the volume ratio of ethanol to water is 20:80) containing 5 wt% hydrochloric acid at 30°C for 12 h to obtain a highly hydrophilic composite diaphragm.

The composite diaphragm for hydrogen production by alkaline electrolysis water prepared in Examples 1 to 6 were tested along with two commercially available sulfonated polyphenylene sulfide woven fabrics (referred to as Comparative Examples 1 and 2 respectively), and the test results were shown in Table 1.

The polyphenylene sulfide woven fabric of Comparative Example 1 was purchased from Toray Industries, Inc., and that is the third-generation polyphenylene sulfide diaphragm of Toray with an areal weight of 445±20 g/m² and a surface resistance of less than 0.25 Ω•cm². The polyphenylene sulfide woven fabric of Comparative Example 2 was purchased from the Tianjin Key Laboratory of Pulp and Paper, and has an areal weight of 570±30 g/m² and a surface resistance of less than 0.40 Ω•cm².

The testing methods for Electrolysis Water Tests 1, 2, and 3 involved that diaphragms and polyphenylene sulfide woven fabrics with the same area were taken so as to completely cover the anode and cathode, nickel mesh (thickness of 0.38 mm, 60 mesh) was used as the anode and cathode, and 6M potassium hydroxide aqueous solution was used as the electrolyte; the current density for hydrogen production by alkaline electrolysis water was set at 0.8 A/cm², and the electrolysis was performed by way of a constant current charging; the temperature of the electrolyte was adjusted to 90°C, 100°C, and 110°C, respectively, and the electrolysis voltage at different temperatures were observed.

**Table 1**

| Test Item | Example | | | | | | Comparative Example | |
|---|---|---|---|---|---|---|---|---|
| | 1 | 2 | 3 | 4 | 5 | 6 | 1 | 2 |
| Average Pore diameter (4 V/A) (nm) | 150.9 2 | 217.2 4 | 176.2 4 | 159.1 3 | 189.5 7 | 204.6 1 | 1596.3 7 | 2327.3 5 |
| Surface Pore Volume Ratio (m²/g) | 17.39 2 | 18.10 6 | 16.39 3 | 17.00 4 | 16.87 1 | 17.20 7 | 6.368 | 4.352 |
| diaphragm thickness(µm) | 450 | 500 | 450 | 550 | 500 | 450 | 850±10 0 | 820±80 |
| Porosity (%) | 80.14 | 73.28 | 75.64 | 78.16 | 78.39 | 80.27 | 62.31 | 65.47 |
| Alkali Solution Contact Angle at Diaphragm Surface (°) | <10 | <10 | <10 | <15 | <15 | <10 | 82.7 | 91.5 |
| Water Electrolysis Test 1 (Working Voltage V) (90°C, 0.8A/cm²) | 1.83 | 1.81 | 1.79 | 1.83 | 1.87 | 1.82 | 2.07 | 2.13 |
| Water Electrolysis Test 2 (Working Voltage V) (100°C, 0.8A/cm²) | 1.75 | 1.79 | 1.78 | 1.76 | 1.76 | 1.74 | 1.98 | 2.01 |
| Water Electrolysis Test 3 (Working Voltage V) (110°C, 0.8A/cm²) | 1.70 | 1.72 | 1.73 | 1.71 | 1.71 | 1.71 | 1.92 | 1.96 |

According to the data in Table 1, compared to the sulfonated polyphenylene sulfide woven fabrics in Comparative Examples 1 and 2, the composite diaphragm for hydrogen production by alkaline electrolysis water in Examples 1 to 6 have similar diaphragm thickness, smaller average pore sizes and higher surface pore volume ratios and porosities. Therefore, they can more effectively prevent the mixing of oxygen produced on the anode side and hydrogen produced on the cathode side, and ensure the purity and safety of the generated hydrogen. At the same time, compared to the sulfonated polyphenylene sulfide woven fabrics in Comparative Examples 1 and 2, the composite diaphragm for hydrogen production by alkaline electrolysis water in Examples 1 to 6 have smaller alkali solution contact angle at their surfaces. The composite diaphragm for hydrogen production by alkaline electrolysis water in Examples 1 to 6 have stronger hydrophilicity, which can avoid the problem of the detachment of inorganic materials caused by weak binding force between inorganic particles and the diaphragm substrate during long-term use. As shown in Table 1, the water electrolysis test results under identical current density but different electrolysis temperatures demonstrate that the composite diaphragm delivers lower voltage and higher current efficiency compared to sulfonated polyphenylene sulfide woven fabric.

The present invention has been described as above with respect to preferred embodiments, but these embodiments are only exemplary and serve only illustrative purposes. On this basis, various substitutions and modifications can be made to the present invention, all of which fall within the scope of protection of the application.

## Claims

1. A method for preparing a composite diaphragm for hydrogen production by alkaline electrolysis water, **characterized in that**, the method comprises the following steps of:
(1) adding a polymer, a diluent, a plasticizer and an inorganic particle precursor with a mass ratio of (10-50):(30-85):(5-15):(1-15) into a stirring kettle, heating to 130-220°C and stirring thoroughly until a homogeneous solution is obtained, and leaving the solution stand for defoaming to prepare a diaphragm-forming solution, wherein the diluent is one or more selected from the group consisting of diphenyl ether, butyrolactone, cyclohexanone, methyl salicylate and dimethyl sulfone;
(2) heating a polymer support mesh to a temperature of 60-160°C, and evenly coating the diaphragm-forming solution on the surface of the polymer support mesh, and subsequently performing a two-stage cooling process, in order to produce a primary diaphragm via thermally induced phase separation occurred during the continuous first stage and second stage cooling process;
(3) immersing the primary diaphragm in an extract solution at 20~50°C for 2~12 hours, in order to remove the diluent and meanwhile generate inorganic particles in situ, and thereby obtain a composite diaphragm.

2. The method according to claim 1, **characterized in that**, the polymer is one or more selected from the group of polysulfone, polyethersulfone, polyimide, sulfonated polyphenylene sulfide, sulfonated polyetheretherketone and sulfonated polytetrafluoroethylene.

3. The method according to claim 1 or 2, **characterized in that**, the plasticizer is one or more selected from the group consisting of dimethyl phthalate, dioctyl phthalate, dibutyl phthalate, dioctyl sebacate and dioctyl adipate.

4. The method according to claim 1 or 2, **characterized in that**, the inorganic particle precursor is tetrabutyl titanate and/or zirconium oxychloride.

5. The method according to claim 1 or 2, **characterized in that**, the extract solution is an aqueous solution containing acid or alkali.

6. The method according to claim 5, **characterized in that**, the aqueous solution containing acid or alkali is 2-15wt% ammonia solution or 1-10wt% hydrochloric acid solution.

7. The method according to any one of claims 1, 2 or 6, **characterized in that**, the extract solution further comprises polar solvent, preferably water and/or ethanol.

8. The method according to any one of claims 1, 2 or 6, **characterized in that**, the first cooling stage uses air as the cooling medium, with a temperature of 5 to 50°C and a humidity of 25 to 50 RH%, and the liquid film stays in the air for 5 to 60 seconds.

9. The method according to any one of claims 1, 2 or 6, **characterized in that**, the second cooling stage uses ice-water mixture as the cooling medium, with a temperature of 0°C, and the liquid film stays in the mixture of ice and water for 20 to 150 seconds.

10. The method according to any one of claims 1, 2 or 6, **characterized in that**, the polymer support mesh is made by one or more materials selected from the group consisting of polypropylene, polyimide, polyphenylene sulfide, polyether ether ketone and nylon-66, with a thickness of 40 to 450 µm and a mesh size of 20 to 150 mesh.

11. A composite diaphragm for hydrogen production by alkaline electrolysis water, which is prepared by the method according to any one of claims 1 to 10.
